# EUROPÄISCHE PATENTANMELDUNG

(11) **EP 1 924 132 A1**
(43) Veröffentlichungstag der Anmeldung: **21.05.2008**
(21) Anmeldenummer: 07022258.3
(22) Anmeldetag: 16.11.2007
(51) Int. Cl.: H05K 7/20, H02P 1/20, H05K 7/14, B60H 1/14, H01C 1/082, H02K 23/66

(54) **Kühler**

(30) Priorität: 16.11.2006 DE 102006054035
(71) Anmelder: Behr GmbH & Co. KG, 70469 Stuttgart (DE)
(72) Erfinder: Bielesch, Thomas, 75417 Mühlacker (DE); Schweizer, Benjamin, 75179 Pforzheim (DE)

(57) **Zusammenfassung**

Die Erfindung betrifft einen Kühler mit einem elektrisch betriebenen Lüfter (5) zur Belüftung des Kühlers (3), wobei der Lüfter (5) einen elektrischen Vorwiderstand (13) aufweist.

Um einen verbesserten Kühler zu schaffen, steht der elektrische Vorwiderstand (13) zur Kühlung des elektrischen Vorwiderstands (13) mit dem Kühler (3) in Wärmeleitkontakt.

## Beschreibung

Die Erfindung betrifft einen Kühler mit einem elektrisch betriebenen Lüfter zur Belüftung des Kühlers, wobei der Lüfter einen elektrischen Vorwiderstand aufweist.

Kühler mit elektrischen Vorwiderständen sind bekannt. Durch Zwischenschalten des elektrischen Vorwiderstandes kann die Drehzahl des elektrisch betriebenen Lüfters gesteuert werden.

Aufgabe der Erfindung ist es, einen verbesserten Kühler, insbesondere einen Kühler mit einem auf einfache und wirksame Art und Weise gekühlten elektrischen Vorwiderstand, zu schaffen.

Die Aufgabe ist bei einem Kühler mit einem elektrisch betriebenen Lüfter zur Belüftung des Kühlers, wobei der Lüfter einen elektrischen Vorwiderstand aufweist, dadurch gelöst, dass der elektrische Vorwiderstand zur Kühlung des elektrischen Vorwiderstandes mit dem Kühler in einem Wärmeleitkontakt steht. Vorteilhaft kann so dem elektrischen Vorwiderstand über den Wärmeleitkontakt Wärme entzogen werden, also dem Kühler zugeführt werden. Der Vorwiderstand wird also insbesondere von dem Kühler mitgekühlt. Dadurch können zu hohe Oberflächentemperaturen des Vorwiderstands vermieden werden. Vorteilhaft muss zur Kühlung des elektrischen Vorwiderstandes dieser nicht im Kühlluftstrom, insbesondere im durch den elektrisch betriebenen Lüfter geförderten Kühlluftstrom, positioniert werden. Der üblicherweise zusätzlich hierfür erforderliche Bauraum wird frei, kann mithin vorteilhaft für andere Komponenten eingesetzt werden. Außerdem tritt durch eine mögliche Positionierung des elektrischen Vorwiderstandes außerhalb des Kühlluftstroms des Kühlers keinerlei Beeinträchtigung des Kühlluftstroms auf. Vielmehr kann der Kühlluftstrom ungehindert geführt werden.

An der Luftanströmseite beziehungsweise Luftabströmseite des elektrisch betriebenen Lüfters kann der zur Kühlluftführung notwendige Bauraum freigegeben werden- Insbesondere müssen an der Lüfterzarge keine zusätzlichen Bauteile in Form des elektrischen Vorwiderstandes fixiert werden. Vorteilhaft weist der Kühler einen maximal nutzbaren Luftstrom für ein entsprechendes Kühlmodul auf. Ferner kann von dem elektrischen Vorwiderstand keine thermische Belastung in unmittelbarer Nähe eines üblicherweise verwendeten Kunststoffmaterials, insbesondere der Lüfterzarge, beispielsweise durch bei einer Luftkühlung auftretende hohe Temperaturen von circa 300 bis 900 Grad Celsius, ausgehen. Vorteilhaft kann also der nutzbare Kühlluftstrom durch den Wegfall des versperrenden elektrischen Vorwiderstandes erhöht werden. Vorteilhaft reduziert sich der insgesamt benötigte Bauraum durch Nutzung vorhandener Freiräume im Wärmetauscherbereich.

Durch den elektrischen Wärmeleitkontakt zum Kühler kann eine verbesserte Wärmeabfuhr durch Wärmeleitung über einen Wärmeübertrager oder Wärmetauscher des Kühlers erreicht werden. Vorteilhaft lässt sich auch die thermische Beaufschlagung des Umfeldes des elektrischen Vorwiderstandes reduzieren, wodurch sich insbesondere ein Überhitzungsrisiko minimieren lässt. Darüber hinaus kann der Wärmeleitkontakt auf einfache Art und Weise hergestellt werden, was zu einer vereinfachten Montage und/oder Kostenreduzierung führen kann. Insbesondere kann durch die Verwendung von umweltbeständigen Materialien, insbesondere zur Herstellung des Wärmeleitkontakts, eine hohe Lebensdauer des Kühlers beziehungsweise des elektrischen Vorwiderstands des Kühlers erreicht werden.

Die direkte Zuordnung des elektrischen Vorwiderstandes zu dem Kühler ermöglicht eine Verbesserung des Geräuschverhaltens, insbesondere durch den dadurch möglichen homogeneren Luftstrom. Der elektrische Vorwiderstand kann über eine Lüftersteuerung des Kühlers angesteuert werden, beispielsweise bei Bedarf, insbesondere in Reihe mit einem Lüftermotor, zugeschaltet werden. Bei dem Kühler kann es sich um einen Kühler eines Kraftfahrzeugs handeln, insbesondere um einen Kühlmittelkühler, Ladeluftkühler, Ölkühler und/oder Kondensator einer Klimaanlage oder beliebige andere Kühler.

Vorteilhaft kann der Vorwiderstand zum Herstellen des Wärmeleitkontakts auch integraler Bestandteil des Kühlers sein, wobei also die Abwärme quasi direkt im Kühler entsteht und besonders effizient abgeführt werden kann. Gegebenenfall kann der Kühler dazu dem übrigen Kraftfahrzeug elektrisch isoliert zugeordnet sein, also entsprechende Fixierungen zur Fixierung beispielsweise an einer Karosserie des Kraftfahrzeugs mit entsprechenden elektrischen Isolatoren aufweisen.

Ein bevorzugtes Ausführungsbeispiel ist dadurch gekennzeichnet, dass der elektrische Vorwiderstand einem Seitenteil eines Wärmeübertragers des Kühlers zugeordnet ist. Der elektrische Vorwiderstand kann besonders bauraumsparend seitlich des Kühlers untergebracht werden, wobei der Wärmeübertrager dem elektrischen Vorwiderstand über den Wärmeleitkontakt die notwendige Wärmemenge zur Kühlung entziehen kann.

Ein weiteres bevorzugtes Ausführungsbeispiel ist dadurch gekennzeichnet, dass der elektrische Vorwiderstand einem Wasserkasten des Wärmeübertragers des Kühlers zugeordnet ist. Vorteilhaft kann die Wärme in ein innerhalb des Kühlers geführtes Fluid direkt über den Wasserkasten zugeführt werden.

Ein weiteres bevorzugtes Ausführungsbeispiel ist dadurch gekennzeichnet, dass der elektrische Vorwiderstand einem Fluidstutzen des Kühlers zugeordnet ist. Bei dem Fluidstutzen kann es sich um einen Fluidanschluss zum Abführen beziehungsweise Zuführen eines zu kühlenden Fluids handeln, beispielsweise ein Kühlmittel, Kühlwasser und/oder ein entsprechendes Kühlwasser-Kühlmittelgemisch. Bei dem Fluid kann es sich jedoch auch um ein Öl oder ein Kättemittel handeln. Vorteilhaft kann die zur Kühlung des elektrischen Vorwiderstands abzuführende Wärme über den Fluidstutzen direkt dem dadurch geführten Fluid zugeführt werden. Der elektrische Vorwiderstand kann dann an die Außenform des Fluidstutzens angepasst sein, beispielsweise um diesen herumgewickelt sein.

Ein weiteres bevorzugtes Ausführungsbeispiel ist dadurch gekennzeichnet, dass der Fluidstutzen dem Kühler nachgeschaltet ist. Insbesondere kann der Fluidstutzen dem Wärmeübertrager des Kühlers nachgeschaltet sein. Vorteilhaft fließt durch den nachgeschalteten Fluidstutzen mittels des Wärmeübertragers entsprechend gekühltes Fluid, so dass sich eine entsprechend höhere Temperaturdifferenz und mithin bessere Kühlung des elektrischen Vorwiderstands ergibt.

Ein weiteres bevorzugtes Ausführungsbeispiel ist dadurch gekennzeichnet, dass der Vorwiderstand einem Kühlernetz des Kühlers zugeordnet ist. Üblicherweise befindet sich das Kühlernetz des Kühlers in dem Kühlluftstrom und befindet sich in direktem Kontakt mit dem innerhalb des Kühlers geführten Fluid. Vorteilhaft kann auch bei dieser Anordnung die Wärme direkt dem Fluid über das üblicherweise besonders gut wärmeleitend ausgelegte Kühlernetz und zusätzlich auch dem Kühlluftstrom zugeführt werden.

Ein weiteres bevorzugtes Ausführungsbeispiel ist dadurch gekennzeichnet, dass der elektrische Vorwiderstand ein Widerstandsblech aufweist. Vorteilhaft kann der elektrische Vorwiderstand aus besonders temperaturbeständigem Metall, beispielsweise aus Edelstahl gefertigt werden.

Ein weiteres bevorzugtes Ausführungsbeispiel ist dadurch gekennzeichnet, dass das elektrische Widerstandsblech elektrische Steckanschlüsse aufweist. Die Steckanschlüsse können vorteilhaft als integraler Bestandteil des Widerstandsblechs ausgelegt werden und erleichtern die Kontaktierung. Vorteilhaft können so Fertigungs- und Montageschritte eingespart werden.

Ein weiteres bevorzugtes Ausführungsbeispiel ist dadurch gekennzeichnet, dass das Widerstandsblech ein Stanzteil ist. Stanzteile können auf einfache Art und Weise in hoher Stückzahl mit guter Maßhaltigkeit und kostengünstig gefertigt werden.

Ein weiteres bevorzugtes Ausführungsbeispiel ist dadurch gekennzeichnet, dass der elektrische Vorwiderstand eine Mikrotemperatursicherung aufweist. Die Mikrotemperatursicherung kann beispielsweise in Reihe mit zwei Stanzteilen des Widerstandsblechs geschaltet werden. In diesem Fall kann der elektrische Vorwiderstand dreiteilig aufgebaut sein, also zwei Widerstandsbleche umfassen, die über die Mikrotemperatursicherung miteinander kontaktiert sind. Vorteilhaft kann die Mikrotemperatursicherung eine Überhitzung des elektrischen Vorwiderstandes durch eine entsprechende elektrische Trennung der zwei Widerstandsbleche im Falle eines Überschreitens einer vorgegebenen Temperaturschwelle verhindern. Durch die Mikrotemperatursicherung kann auch eine thermische Überlastung anliegender Bauteile, beispielsweise über den elektrischen Wärmeleitkontakt verbundene, verhindert werden.

Ein weiteres bevorzugtes Ausführungsbeispiel ist dadurch gekennzeichnet, dass zwischen dem Kühler und dem elektrischen Vorwiderstand ein elektrischer Isolator zur Herstellung des Wärmeleitkontakts vorgesehen ist. Vorteilhaft kann der elektrische Vorwiderstand über den Isolator zwar thermisch mit dem Kühler gekoppelt, jedoch elektrisch entkoppelt werden. Vorteilhaft können so Kurzschlüsse über den Kühler verhindert und ein guter Wärmeübergang gewährleistet werden.

Ein weiteres bevorzugtes Ausführungsbeispiel ist dadurch gekennzeichnet, dass der elektrische Isolator einen elektrisch isolierenden und thermisch leitenden Kleber aufweist. Vorteilhaft kann der Isolator eine dritte Funktion übernehmen, nämlich eine stoffschlüssige Verbindung zwischen dem Kühler und dem elektrischen Vorwiderstand zur Befestigung des elektrischen Vorwiderstandes an dem Kühler realisieren.

Ein weiteres bevorzugtes Ausführungsbeispiel ist dadurch gekennzeichnet, dass der elektrische Isolator formschlüssig zwischen dem Kühler und dem elektrischen Vorwiderstand fixiert ist. Vorteilhaft kann die formschlüssige Fixierung zusätzlich eine gewisse Fixierkraft beziehungsweise Anpresskraft aufbringen, so dass ein besonders guter Wärmeleitkontakt gewährleistet ist. Bei der formschlüssigen Verbindung kann es sich beispielsweise um eine Verschraubung, Vernietung, Verklemmung, Verrastung und/oder Ähnliches handeln.

Ein weiteres bevorzugtes Ausführungsbeispiel ist dadurch gekennzeichnet, dass der elektrische Isolator formschlüssig mittels einer Verschraubung dem Kühler zugeordnet ist, wobei die Verschraubung eine Isolierhülse aufweist. Vorteilhaft können gebräuchliche Metallschrauben, die auch eine hohe Temperaturbeständigkeit aufweisen, verwendet werden. Die zusätzlich beigefügte Isolierhülse kann die elektrische Trennung zwischen dem Kühler und dem elektrischen Vorwiderstand gewährleisten. Alternativ kann eine Verschraubung beziehungsweise Verbindung mittels elektrisch isolierenden Verbindungsmitteln beziehungsweise Schrauben erfolgen.

Die Aufgabe ist außerdem durch ein Kraftfahrzeug mit einem vorab beschriebenen Kühler gelöst. Es ergeben sich insbesondere die beschriebenen Vorteile.

Die Aufgabe ist außerdem bei einem Kraftfahrzeug mit einem Kühler mit einem elektrisch betriebenen Lüfter zur Belüftung des Kühlers, wobei der Lüfter einen elektrischen Vorwiderstand aufweist, dadurch gelöst, dass der elektrische Vorwiderstand zur Kühlung des elektrischen Vorwiderstands mit dem Kraftfahrzeug in einem Wärmeleitkontakt steht. Über den Wärmeleitkontakt kann die zur Kühlung des elektrischen Vorwiderstandes abzuführende Wärme dem übrigen Kraftfahrzeug zugeführt werden.

Ein bevorzugtes Ausführungsbeispiel des Kraftfahrzeuges ist dadurch gekennzeichnet, dass der elektrische Vorwiderstand mit einem Karosserieteil des Kraftfahrzeugs in dem Wärmeleitkontakt steht. Das Karosserieteil, insbesondere ein Blechteil, des Kraftfahrzeuges kann eine gute Wärmeleitfähigkeit und/oder -speicherfähigkeit aufweisen. Dadurch lässt sich der elektrische Vorwiderstand effektiv kühlen.

Weitere Vorteile, Merkmale und Einzelheiten der Erfindung ergeben sich aus der nachfolgenden Beschreibung, in der unter Bezug auf die Zeichnung verschiedene Ausführungsbeispiele im Einzelnen beschrieben sind. Gleiche, ähnliche und/oder funktionsgleiche Teile sind mit gleichen Bezugszeichen versehen. Es zeigen:
- Figur 1: eine Draufsicht auf einen Kühler mit einem elektrisch betriebenen Lüfter;
- Figur 2: eine Draufsicht auf einen Kühler mit zwei elektrisch betriebenen Lüftern;
- Figur 3: die Draufsicht des in Figur 1 gezeigten Kühlers, jedoch ohne Verkabelung;
- Figur 4: eine Seitenansicht des in Figur 3 gezeigten Kühlers;
- Figur 5: eine Detailansicht eines elektrischen Vorwiderstandes des in den Figuren 3 und 4 gezeigten Kühlers;
- Figur 6: eine Schnittansicht des in Figur 5 gezeigten elektrischen Vorwiderstands entlang der Linie VI-VI in Figur 5;
- Figur 7: eine Draufsicht auf einen elektrischen Vorwiderstand mit einer Mikrotemperatursicherung;
- Figur 8: eine Seitenansicht des in Figur 7 gezeigten elektrischen Vorwiderstandes; und
- Figur 9: eine Schnittansicht des in Figur 7 gezeigten elektrischen Vorwiderstandes entlang der Linie IX-IX in Figur 7.

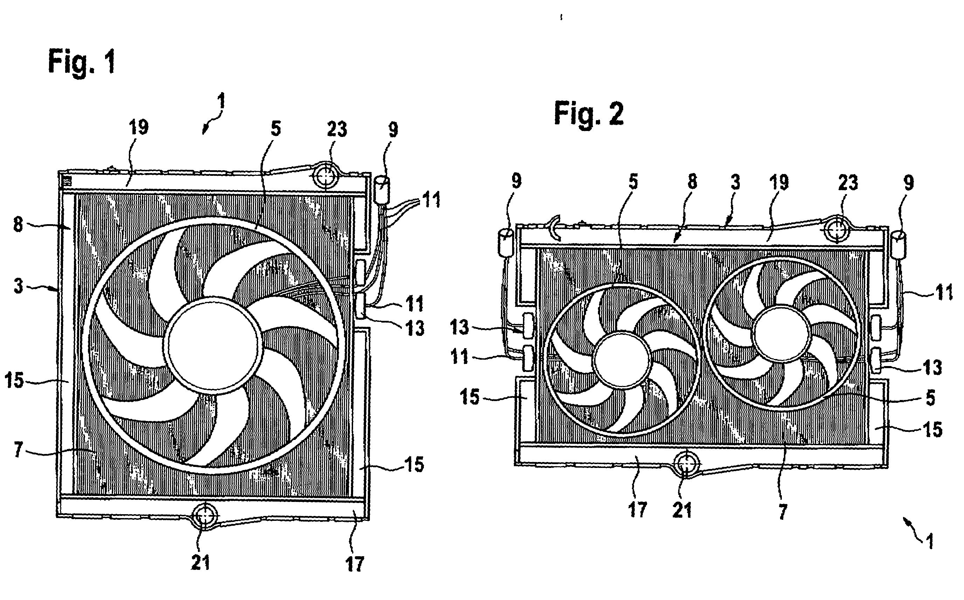

Figur 1 zeigt einen Teil eines Kraftfahrzeuges 1 mit einem Kühler 3. Bei dem Kühler 3 kann es sich beispielsweise um den Kühler eines Verbrennungsmotors des Kraftfahrzeuges 1 handeln. Der Kühler 3 weist einen elektrisch betriebenen Lüfter 5 auf, der ausschließlich oder zusätzlich einen Kühlluftstrom zur Beaufschlagung eines Kühlemetzes 7 eines Wärmeübertragers 8 des Kühlers 1 mit Kühlluft ausgelegt ist.

Der elektrisch betriebene Lüfter 5 kann über einen Bordnetzstecker 9 des Kraftfahrzeuges 1 mit einem übrigen, in Figur 1 nicht dargestellten, Kabelbaum des Kraftfahrzeuges 1 kontaktiert werden. Über den Bordnetzstecker 9 und den Kabelbaum kann der Lüfter 5 mit einem entsprechenden Lüftersteuergerät des Kraftfahrzeuges 1 verbunden werden. Die Verbindung kann über Leitungen 11 wahlweise direkt oder über einen elektrischen Vorwiderstand 13 erfolgen.

Der elektrische Vorwiderstand 13 ist in einem wärmeleitenden Kontakt einem Seitenteil 15 des Kühlers 3 zugeordnet. Entsprechende Wärmemengen können also über das Seitenteil 15 direkt dem Kühler 3 zugeführt werden. Alternativ kann der elektrische Vorwiderstand 13 an einem beliebigen anderen Bauteil des Kühlers 3 angeordnet sein.

Der Kühler 3 weist einen unteren Wasserkasten 17 und einen oberen Wasserkasten 19 auf. Dem unteren Wasserkasten 17 ist ein unterer Fluidstutzen 21 und dem oberen Wasserkasten 19 ein oberer Fluidstutzen 23 zugeordnet. Über die Fluidstutzen 21 und 23 kann der Kühler 3 mit einem nicht näher dargestellten Kühlsystem ausgelegt zum Führen eines Fluids des Kraftfahrzeugs 1 verbunden werden.

Figur 2 zeigt einen Kühler 3, der ebenfalls Teil eines nicht näher dargestellten Kraftfahrzeugs 1 sein kann. Im Unterschied zur Darstellung gemäß Figur 1 weist der Kühler 3 gemäß Figur 2 zwei Lüfter 5 auf, die über zwei Bordnetzstecker 9 separat kontaktierbar beziehungsweise ansteuerbar sind. Mithin ist jedem der Lüfter 5 ein eigener elektrischer Vorwiderstand 13 zugeordnet.

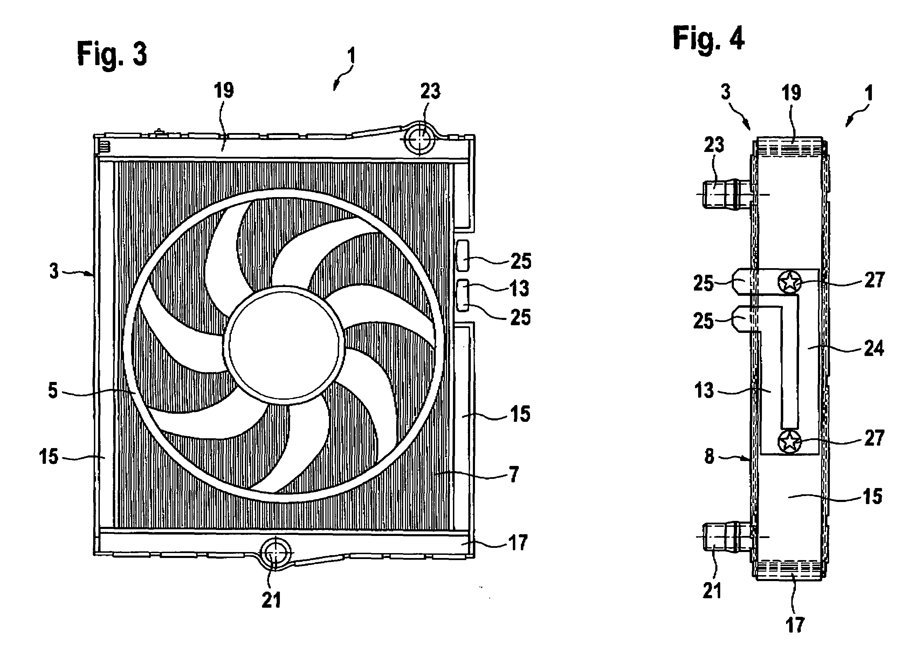

Figur 3 zeigt den in Figur 1 gezeigten Kühler 3, jedoch ohne Verkabelung, also ohne die Leitungen 11 und den Bordnetzstecker 9.

Figur 4 zeigt eine Seitenansicht des in Figur 3 gezeigten Kühlers 3. Der elektrische Vorwiderstand 13 weist zwei elektrische Steckanschlüsse 25, ausgelegt zur Kontaktierung mit dem Bordnetz des Kraftfahrzeuges 1 auf. In Figur 4 ist ersichtlich, dass der elektrische Vorwiderstand über zwei Schrauben 27 mit dem Seitenteil 15 des Kühlers 3 verschraubt ist. Bei dem elektrischen Vorwiderstand 13 kann es sich um ein Blechteil, insbesondere ein Stanzteil, handeln. Der elektrische Vorwiderstand 13 weist ein im Wesentlichen U-förmig beziehungsweise mäanderförmig gestaltetes Widerstandsblech 24 auf, wobei die freien Enden jeweils, in Ausrichtung der Figur 4 gesehen, nach links ungefähr in einem rechten Winkel abgewinkelt verlaufen. Die abgewinkelten Bereiche bilden die elektrischen Steckanschlüsse 25 aus. Vorteilhaft weisen die elektrischen Steckanschlüsse 25 in dieselbe Richtung wie die Fluidstutzen 21 und 23 des Kühlers 3. Mithin kann der Kühler 3 sowohl fluidisch wie auch elektrisch von derselben Seite aus kontaktiert werden.

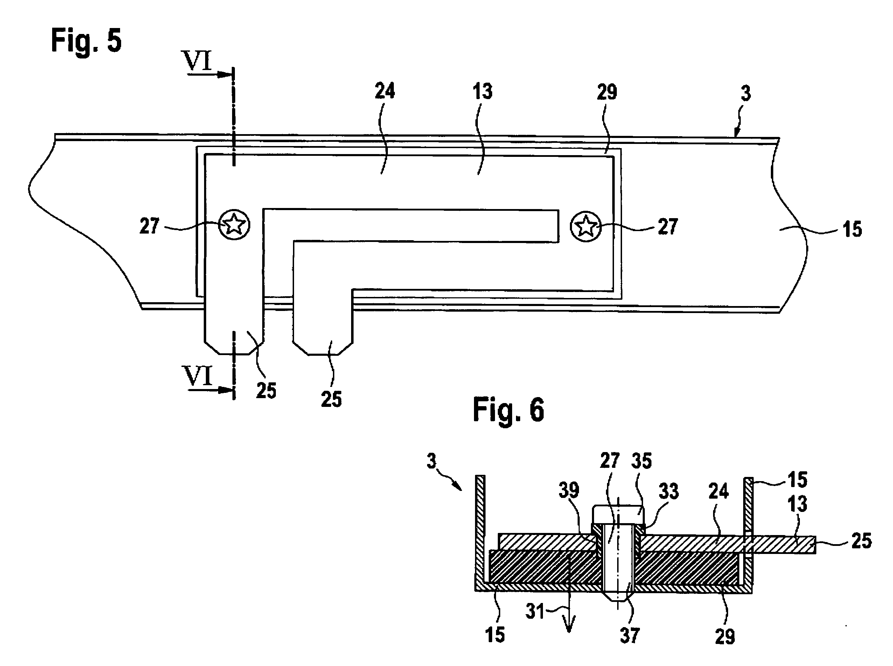

Figur 5 zeigt eine Detailansicht des elektrischen Vorwiderstands 13 des in den Figuren 3 und 4 gezeigten Seitenteils 15 des Kühlers 3.

Figur 6 zeigt eine Schnittansicht des in Figur 5 gezeigten elektrischen Vorwiderstands 13 entlang der Linie VI - VI. Es ist zu erkennen, dass zwischen dem Seitenteil 15 des Kühlers 3 und dem elektrischen Vorwiderstand 13 ein Isolator 29 angeordnet ist. Vorteilhaft kann der Isolator 29 eine gute thermische Leitfähigkeit und elektrisch isolierende Eigenschaften aufweisen. Insbesondere in der Schnittdarstellung gemäß Figur 6 ist zu erkennen, dass der elektrische Vorwiderstand 13 über den Isolator 29 mit der Seitenwand 15 des Kühlers 3 des Kraftfahrzeuges 1 in einem Wärmeleitkontakt steht.

Die Verlustleistung des elektrischen Vorwiderstandes 13 kann über den Isolator 29 an den Kühler 3 beziehungsweise an das in dem Kühler 3 geführte Fluid abgegeben werden, was beispielhaft durch einen Pfeil 31 in Figur 6 angedeutet ist. Das Seitenteil 15 des Kühlers 3 kann elektrisch leitfähige Materialien aufweisen, was den Isolator 29 erforderlich macht. Ebenso können die Schrauben 27 elektrisch leitfähiges Material aufweisen, so dass diese ebenfalls elektrisch isoliert von dem elektrischen Vorwiderstand 13 angebracht werden müssen. Hierzu weisen die Verschraubungen, die mittels den Schrauben 27 hergestellt sind, jeweils zusätzlich eine gestufte Isolierhülse 33 auf, die jeweils einen Schraubenkopf 35 sowie einen Schraubenstift 37 der Schrauben 27 elektrisch von dem elektrischen Vorwiderstand 13 beziehungsweise einer Bohrung 39 des elektrischen Vorwiderstands 13 trennen.

In Figur 6 ist zu erkennen, dass sowohl der Schraubenstift 37 sowie die diesen umgebende Isolierhülse 33 so in die Bohrung 39 des elektrischen Vorwiderstands 13 eingebracht sind, dass die Schraube 27 vollständig von dem elektrischen Vorwiderstand 13 elektrisch isoliert ist.

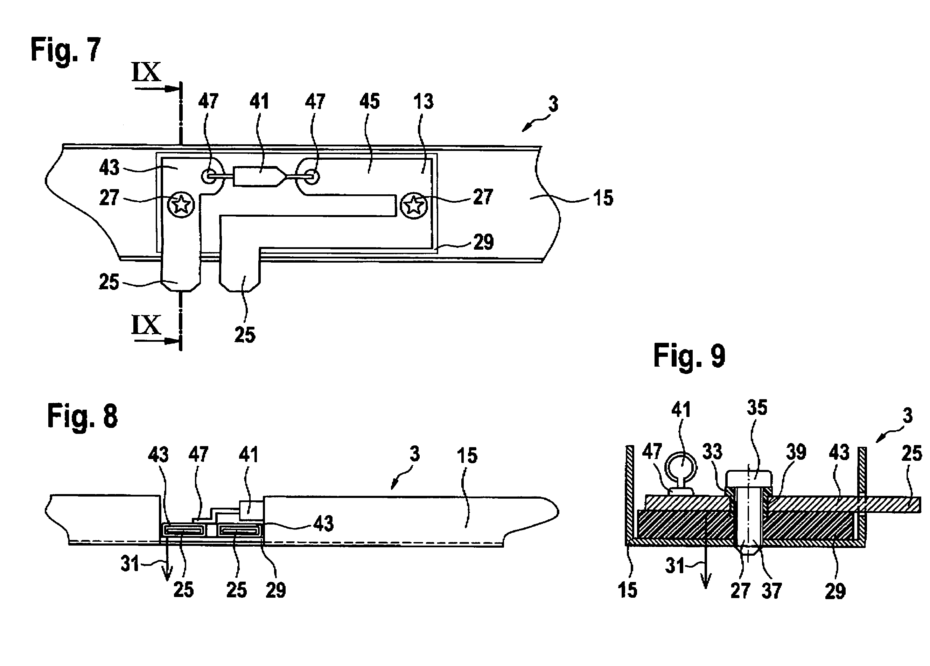

Figur 7 zeigt eine Draufsicht auf einen weiteren elektrischen Vorwiderstand 13 mit einer Mikrotemperatursicherung 41.

Figur 8 zeigt eine Seitenansicht des in Figur 7 dargestellten elektrischen Vorwiderstandes 13.

Figur 9 zeigt eine Schnittansicht des in Figur 7 gezeigten elektrischen Vorwiderstandes 13 entlang der Linie IX - IX in Figur 7. Im Unterschied zu dem elektrischen Vorwiderstand gemäß den vorangehenden Figuren ist der elektrische Vorwiderstand 13 gemäß den Figuren 7 bis 9 nicht als integrales einteiliges Teil, sondem mehrteilig ausgeführt. Hierzu weist der elektrische Vorwiderstand 13 einen ersten Blechstreifen 43 und einen zweiten Blechstreifen 45 auf, die elektrisch über die Mikrotemperatursicherung 41 in Reihe geschaltet sind. Die Kontaktierung der Mikrotemperatursicherung 41 kann auf bekannte Art und Weise, beispielsweise mittels Lötstellen 47, beispielsweise hochtemperaturbeständigen Hartlotstellen, oder einer Schweißverbindung ausgeführt sein. Jeder der Blechstreifen 43 und 45 weist einen der elektrischen Steckanschlüsse 25 auf. Außerdem ist jedem der Blechstreifen 43 und 45 eine der Schrauben 27 zugeordnet, so dass darüber jeder der Blechstreifen 43 und 45 separat mit dem Seitenteil 15 des Kühlers 3 verschraubt werden kann.

Bei dem Isolator 29 kann es sich um ein beliebiges; nicht leitendes Material handeln. Denkbar sind insbesondere Kunststoffe oder keramische Werkstoffe. Vorteilhaft kann jedoch der Isolator 29 auch als elektrisch isolierende Verklebung ausgeführt sein. Vorteilhaft können hierzu Klebstoffe mit besonders guter Wärmeleitfähigkeit verwendet werden. In diesem Fall kann gegebenenfalls auf die Schrauben 27 zur Fixierung des elektrischen Vorwiderstandes 13 an dem Kühler 3 verzichtet werden.

Ferner sind auch andere Fixierungen und/oder Zuordnungen des Vorwiderstands 13 an dem Kühler 3 denkbar, beispielsweise formschlüssig durch Umwickeln oder durch andere an die Außenkontur des Kühlers 3 angepasste Formgebungen.

Schließlich kann der Vorwiderstand integraler Bestandteil des Kühlers 3 sein, der dazu gegebenenfalls selbst elektrisch isoliert dem übrigen Kraftfahrzeug 1 zugeordnet sein kann.

## Patentansprüche

1. Kühler (3) mit einem elektrisch betriebenen Lüfter (5) zur Belüftung des Kühlers (3), wobei der Lüfter (5) einen elektrischen Vorwiderstand (13) aufweist, **dadurch gekennzeichnet, dass** der elektrische Vorwiderstand (13) zur Kühlung des elektrischen Vorwiderstandes (13) mit dem Kühler (3) in einem Wärmeleitkontakt steht.

2. Kühler nach Anspruch 1, **dadurch gekennzeichnet, dass** der elektrische Vorwiderstand (13) einem Seitenteil (15) eines Wärmeübertragers (8) des Kühlers (3) zugeordnet ist.

3. Kühler nach einem der vorhergehenden Ansprüche, **dadurch gekennzeichnet, dass** der elektrische Vorwiderstand (13) einem Wasserkasten (17, 19) des Wärmeübertragers (8) des Kühlers (3) zugeordnet ist.

4. Kühler nach einem der vorhergehenden Ansprüche, **dadurch gekennzeichnet, dass** der elektrische Vorwiderstand (13) einem Fluidstutzen (21, 23) des Kühlers (3) zugeordnet ist.

5. Kühler nach dem vorhergehenden Anspruch, **dadurch gekennzeichnet, dass** der Fluidstutzen (21,23) dem Kühler (3) nachgeschaltet ist.

6. Kühler nach einem der vorhergehenden Ansprüche,**dadurch gekennzeichnet, dass** der elektrische Vorwiderstand (13) einem Kühlernetz (7) des Kühlers (3) zugeordnet ist.

7. Kühler nach einem der vorhergehenden Ansprüche, **dadurch gekennzeichnet, dass** der elektrische Vorwiderstand (13) ein Widerstandsblech (24;43,45) aufweist.

8. Kühler nach dem vorhergehenden Anspruch, **dadurch gekennzeichnet, dass** das Widerstandsblech (24;43,45) elektrische Steckanschlüsse (25) aufweist.

9. Kühler nach Anspruch 7 oder 8, **dadurch gekennzeichnet, dass** das Widerstandsblech (24; 43,45) als Stanzteil ausgeführt ist.

10. Kühler nach einem der vorhergehenden Ansprüche, **dadurch gekennzeichnet, dass** der elektrische Vorwiderstand (13) eine Mikrotemperatursicherung (41) aufweist.

11. Kühler nach einem der vorhergehenden Ansprüche, **dadurch gekennzeichnet, dass** zwischen dem Kühler (3) und dem elektrischen Vorwiderstand (13) ein elektrischer Isolator (29) zur Herstellung des Wärmeleitkontakts angeordnet ist.

12. Kühler nach dem vorhergehenden Anspruch, **dadurch gekennzeichnet, dass** der elektrische Isolator (29) einen elektrisch isolierenden und thermisch leitenden Kleber aufweist.

13. Kühler nach einem der Ansprüche 11 oder 12, **dadurch gekennzeichnet, dass** der elektrische Isolator (29) formschlüssig zwischen dem Kühler (3) und dem elektrischen Vorwiderstand (13) fixiert ist.

14. Kühler nach dem vorhergehenden Anspruch, **dadurch gekennzeichnet, dass** der elektrische Isolator (29) formschlüssig mittels einer Verschraubung fixiert ist, wobei die Verschraubung eine Isolierhülse (33) aufweist.

15. Kraftfahrzeug mit einem Kühler (3) nach einem der vorhergehenden Ansprüche.

16. Kraftfahrzeug mit einem Kühler (3) nach dem Oberbegriff des Anspruchs 1, insbesondere nach Anspruch 1, **dadurch gekennzeichnet, dass** der elektrische Vorwiderstand (13) zur Kühlung des elektrischen Vorwiderstands (13) mit dem Kraftfahrzeug (1) in einem Wärmeleitkontakt steht.

17. Kraftfahrzeug nach Anspruch 16, **dadurch gekennzeichnet, dass** der elektrische Vorwiderstand (13) mit einem Karosserieteil des Kraftfahrzeugs (1) in dem Wärmeleitkontakt steht.
